# DEMANDE DE BREVET EUROPEEN

(11) **EP 3 415 826 A1**
(43) Date de publication de la demande: **19.12.2018**
(21) Numéro de dépôt: 18177152.8
(22) Date de dépôt: 12.06.2018
(51) Int. Cl.: F24D 3/14, F28D 1/047, B21D 9/00, B21D 53/02

(54) **PLAFOND CHAUFFANT ET/OU RAFRAICHISSANT**

(30) Priorité: 16.06.2017 FR 1770634
(71) Demandeur: Innovert, 16400 Puymoyen (FR)
(72) Inventeur: BOURON, Francis, 16000 ANGOULEME (FR); TRIBOUT, Tristan, 16000 ANGOULEME (FR); NEAU, Gaëtan, 16410 TORSAC (FR)
(74) Mandataire: Hege, Frédéric

(57) **Abrégé**

La présente invention concerne un procédé de montage d'un tube creux (2) dans un plafond (1) comportant au moins une étape de cintrage d'un tronçon dudit tube creux (2) en vue de former une boucle d'extrémité (4) et faire repartir le tube (2) en sens inverse. Ledit procédé de montage est particulier en ce qu'on utilise deux plats (6) disposés l'un au-dessus de l'autre et maintenus par un moyen de maintien de l'écartement des deux plats (6), ledit écartement correspondant au diamètre externe dudit tube creux (2), et en ce qu'on introduit au moins une partie dudit tronçon entre les plats (6) au cours d'au moins une partie de l'étape de cintrage.

La présente invention concerne également un plafond (1) comprenant un tube creux (2) destiné à être monté par un procédé selon l'invention.

## Description

La présente invention se situe dans le domaine des parois, telles que des plafonds, planchers, murs, chauffantes et/ou rafraîchissantes. Elle concerne plus particulièrement un plafond chauffant comportant un tube, et une pièce d'extrémité collaborant avec des portions cintrées de ce tube.

Les parois chauffantes et/ou rafraîchissantes, comportant un tube dans lequel circule un fluide caloporteur, sont connues de l'art antérieur. La paroi comporte alors des moyens de soutien du tube apte à lui faire parcourir toute la surface de la paroi, afin que l'effet chauffant et/ou rafraîchissant soit réparti sur la surface de la paroi. Ainsi, le tube est le plus souvent déployé de manière à effectuer des allers et retours parallèles entre eux, entre deux extrémités de la paroi. Le tube doit donc présenter des demi-tours au niveau de chacune de ces deux extrémités de la paroi. Un inconvénient de ce système est le risque de pincement du tube. En effet, le tube présente une capacité de cintrage jusqu'à un certain rayon, généralement déterminé par le fabricant et dépendant du diamètre du tube ainsi que des matériaux le composant ; si on force la courbure du tube en dessous de ce rayon, il risque de se pincer. La circulation du fluide caloporteur à l'intérieur du tube est alors ralentie voire bloquée, ce qui diminue, voire supprime, l'efficacité de la paroi chauffante et/ou rafraîchissante.

Le document FR2942297 propose un dispositif de pose d'un plafond chauffant comportant des pièces de bout présentant des guides autour desquels le tuyau effectue ses demi-tours, empêchant le tuyau de se pincer. Un tel système est complexe, les pièces de bout sont coûteuses et rendent l'installation plus difficile.

Dans le cadre du développement de la présente invention, l'inventeur a cherché une solution permettant de limiter l'ovalisation du tuyau dans ses parties courbes, et donc le risque de pincement. Il a ainsi testé un dispositif comportant une butée d'extrémité, par exemple un mur, sur laquelle s'appuient les parties courbes du tuyau. Cette solution a montré une réduction des pincements, mais les risques de pincement demeurent encore trop importants.

La présente invention a pour objet de pallier au moins en partie à ces inconvénients en proposant un procédé de montage d'un tube creux dans un plafond comportant une étape de cintrage du tube, bien plus simple à mettre en oeuvre, tout en empêchant le pincement du tube lors du cintrage. A cet effet, elle propose un procédé de montage d'un tube creux dans un plafond comportant au moins une étape de cintrage d'un tronçon dudit tube creux en vue de former une boucle d'extrémité et faire repartir le tube en sens inverse. Ledit procédé de montage est particulier en ce qu'on utilise deux plats disposés l'un au-dessus de l'autre maintenus par un moyen de maintien de l'écartement des deux plats, ledit écartement correspondant au diamètre externe dudit tube creux, et en ce qu'on introduit au moins une partie dudit tronçon entre les plats au cours d'au moins une partie de l'étape de cintrage.

Grâce à ces dispositions, un tube peut être monté en serpentin dans un plafond, ou de manière équivalente dans toute autre paroi, au moyen d'un procédé simple et rapide, un gabarit unique pouvant être utilisé pour maintenir en place l'ensemble des tronçons cintrés du tube le long d'une extrémité du plafond, ledit gabarit étant apte à maintenir les tronçons cintrés en place tout en diminuant les risques de pincement dus au cintrage du tube.

Selon d'autres caractéristiques :
- ledit plat supérieur peut s'étendre au-delà du plat inférieur, l'insertion du tube étant ainsi simplifié par le fait que le plat qui s'étend au-delà de l'autre peut servir de guide au tube,
- ledit procédé de montage peut comporter les étapes suivantes :
   - cintrage partiel dudit tronçon selon un rayon tel que le risque de pincement du tronçon est très réduit,
   - introduction dudit tronçon partiellement cintré entre les plats,
   - achèvement du cintrage dudit tronçon en maintenant ledit tronçon entre les plats,
   cette disposition permettant de faciliter le montage, le tube étant plus facile à introduire lorsqu'il est partiellement cintré, et il est protégé contre le pincement lors de la finition du cintrage.

La présente invention concerne également un plafond comprenant un tube creux, destiné à la circulation d'un fluide, ledit tube creux comportant des parties rectilignes et au moins une boucle d'extrémité reliant deux parties rectilignes. Ce plafond est particulier en ce que ledit plafond comporte au moins deux plats disposés l'un au-dessus de l'autre et un moyen de maintien de l'écartement des deux plats, ledit écartement des deux plats correspondant au diamètre externe du tube creux, et en ce que au moins une partie de ladite boucle d'extrémité est logée entre les plats de sorte à empêcher un pincement au niveau de ladite boucle d'extrémité. Les boucles d'extrémité du tube peuvent se trouver dans le même plan, ou dans un plan légèrement décalé ou incliné par rapport au plan des parties rectilignes.

Grâce à ces dispositions, un tube peut être monté en serpentin dans un plafond, ou de manière équivalente toute autre paroi, au moyen d'un procédé simple et rapide. En outre deux plats peuvent être utilisés pour maintenir en place l'ensemble des tronçons cintrés du tube le long d'une extrémité du plafond, lesdits plats étant aptes à maintenir les tronçons cintrés en place tout en diminuant les risques de pincement dus au cintrage du tube.

Selon d'autres caractéristiques :
- ledit écartement des deux plats peut être égal à une valeur comprise entre 1,05 et 1,25 fois le diamètre externe du tube creux, ce qui est suffisamment étroit pour bien maintenir le tronçon cintré du tube et empêcher qu'il ne se pince, tout en étant suffisamment large pour y insérer le tube sans difficultés,
- ledit plat supérieur peut s'étendre au-delà du plat inférieur, l'insertion du tube étant ainsi simplifiée par le fait que le plat supérieur peut servir de guide,
- le moyen de maintien peut comporter une entretoise formant le fond d'un U dont les plats forment les jambes, ce qui constitue un mode de réalisation simple à produire et robuste de l'invention,
- le moyen de maintien peut comporter une entretoise comportant au moins deux guides formant butées de positionnement pour une boucle d'extrémité ; ainsi le tronçon cintré du tube est maintenu dans toutes les directions et lors du montage, le placement en position optimale du tronçon cintré entre les plats est facilité,
- ledit plafond peut comporter des plaques présentant des rainures, chaque rainure logeant une partie rectiligne dudit tube creux, la boucle d'extrémité dudit tube creux s'étendant au-delà de ladite plaque à rainures la plus proche de l'extrémité du plafond, ce qui constitue un mode de réalisation simple et robuste du plafond, tout en laissant une liberté de mouvement aux boucles d'extrémité, réduisant ainsi les risques de pincement à la sortie des plaques,
- ladite boucle d'extrémité peut s'étendre au-delà de ladite plaque à rainures la plus proche de l'extrémité du plafond sur une distance au moins égale à dix fois le diamètre externe dudit tube, ce qui est suffisamment proche pour qu'une bonne partie du tube soit en contact avec la plaque à rainures afin de favoriser l'échange thermique entre le tube et l'ensemble du plafond, tout en laissant suffisamment d'espace pour un logement de la boucle d'extrémité du tube permettant un risque faible de pincement du tube.

La présente invention sera mieux comprise à la lecture de la description détaillée qui fait suite, en référence aux figures annexées dans lesquelles :
- la figure 1 est une vue de face d'un plafond selon l'invention,
- la figure 2 est une vue en coupe transversale de l'extrémité d'une boucle d'un tube maintenu par un profilé, dans un plafond selon un premier mode de réalisation de l'invention,
- la figure 3 est une vue en coupe longitudinale de l'extrémité d'un plafond selon un deuxième mode de réalisation de l'invention,
- la figure 4 est une vue du profilé selon la fig. 2 fixée à une fourrure de plafond,
- la figure 5 est une vue en coupe transversale de l'extrémité d'une boucle d'un tube maintenu par un profilé, dans un plafond selon un troisième mode de réalisation de l'invention.

Dans la description qui suit, le terme « plafond » peut désigner indifféremment tout type de paroi, par exemple un plafond, un plancher ou un mur. Pour simplifier la compréhension, la suite du document décrira un plafond horizontal. Le mot plafond devra donc être compris dans la présente invention comme étant un plafond horizontal ou un plafond incliné, ou un plancher ou un mur.

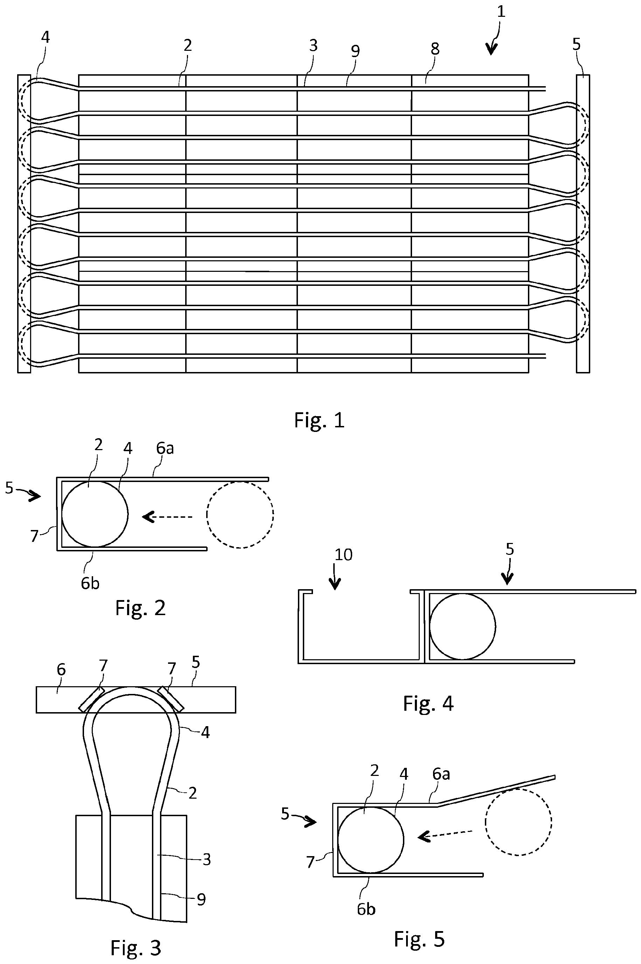

Le plafond 1 selon l'invention, illustrée aux figs. 1 à 5, comprend un tube 2, destiné à la circulation d'un fluide de préférence caloporteur comme de l'eau à une température contrôlée. Lorsque le fluide caloporteur est plus chaud que la pièce dans laquelle il est installé, le plafond devient chauffant, et lorsque celui-ci est plus froid, le plafond 1 devient rafraichissant. Dans le cadre de la présente invention, l'expression « plafond chauffant » doit être comprise comme un plafond pouvant selon la température du fluide, soit chauffer, soit rafraichir. L'expression « plafond chauffant » sera utilisée dès qu'il est possible de rendre le plafond chauffant en faisant circuler dans le tube 2 un fluide de température plus élevée que la température de l'environnement immédiat du plafond 1, par exemple d'une pièce d'habitation comportant un tel plafond 1.

Comme illustré en fig. 1, le tube est disposé en serpentin, afin que le fluide qu'il contient puisse agir de façon uniforme sur la température de la surface d'au moins une partie du plafond 1. Le serpentin comporte des parties rectilignes 3, et des boucles d'extrémité 4 reliant deux parties rectilignes 3.

Les boucles d'extrémité 4 du tube 2 peuvent être maintenues par un profilé 5. Un profilé 5, comme illustré à la fig. 1, peut être disposé à chacune de deux extrémités opposées du plafond 1, sensiblement parallèlement à cette extrémité dans le cas d'une pièce rectangulaire. Le profilé 5 peut comprendre deux plats 6 et un moyen de maintien 7 de l'écartement des deux plats 6. Le moyen de maintien peut être une entretoise 7, ou tout autre moyen apte à maintenir les deux plats 6 parallèles, par exemple deux éléments différents, sur chacun desquels est fixé un plat 6. Par extension, le terme « profilé » sera utilisé dans le cadre de la présente description également pour une telle solution où les deux plats 6 ne sont pas directement reliés entre eux. L'extrémité des boucles d'extrémité 4 est logée entre les deux plats 6. L'écartement entre les deux plats 6 du profilé 5, déterminé par l'entretoise 7, correspond au diamètre externe du tube 2, de sorte qu'on peut insérer un tronçon du tube 2 entre les plats 6, et que les plats 6 empêchent le tube 2 de se pincer au niveau dudit tronçon.

Un pincement du tube 2 peut arriver lorsqu'on cintre le tube 2 selon un rayon de cintrage inférieur au rayon de cintrage minimal donné par le fabricant. La section initialement circulaire du tube 2 prend alors une forme ovale, voire va jusqu'à s'aplatir, de sorte qu'un fluide destiné à circuler à l'intérieur du tube 2 n'arrive plus à passer ; on dit que le tube 2 se pince. Le diamètre du tube 2 dans le sens perpendiculaire au plan de cintrage augmente alors, pour atteindre jusqu'à une valeur de l'ordre de 1,5 fois le diamètre du tube 2.

Dans le cadre de la présente invention, l'expression « diamètre du tube 2 » doit être comprise comme le diamètre extérieur du tube creux 2 sous sa forme circulaire. L'expression « l'écartement entre les deux plats 6 » doit être comprise comme l'espace disponible entre les deux plats 6.

En introduisant le tronçon entre les deux plats 6, le diamètre ne peut pas augmenter au-delà de la distance disponible entre les deux plats 6. Il suffit alors de limiter cette distance à une valeur significativement inférieure à 1,5 fois le diamètre du tube 2, et le tube est alors empêché par les deux plats 6 de se pincer. De préférence, on réduira au maximum la distance entre les deux plats 6.

De préférence l'écartement entre les deux plats 6 est supérieur au diamètre du tube 2 d'une valeur juste suffisante pour permettre lors du montage une insertion du tube 2 entre les deux plats 6 sans effort, grâce à un minimum de jeu. Dans le cadre de la présente demande, l'expression « écartement correspondant au diamètre externe dudit tube creux » doit être comprise comme répondant à cet objectif. Une distance entre les deux plats 6 d'une valeur supérieure de 5 à 25% au diamètre externe du tube 2 peut convenir. L'intérêt d'un écartement « juste suffisant » est de limiter le phénomène d'ovalisation du tube 2, car plus le tube 2 est ovalisé moins sa section est importante, plus les pertes de charge augmentent et moins la circulation du fluide caloporteur sera facile.

On choisira pour les plats 6 un matériau suffisamment rigide pour empêcher le tube 2 de s'ovaliser jusqu'au pincement et d'obstruer la circulation du fluide qu'il transporte. Ce peut être un acier, ou un alliage d'aluminium, ou encore un plastique dur. Mais on évitera notamment les mousses, qui n'empêcheraient pas le tube de s'ovaliser. En effet le tube 2, qui est réalisé en matériaux de synthèse tel que le polyéthylène réticulé (PER) et le polybutylène (PB), a tendance à s'ovaliser lorsqu'on le courbe, jusqu'à se pincer si on le courbe selon un rayon inférieur à son rayon de cintrage minimal. L'invention permet ainsi une diminution du risque de pincement du tube 2 dans ses boucles d'extrémité 4.

Dans le mode de réalisation préféré de l'invention, illustré en fig. 1, le plafond 1 comporte une pluralité de plaques 8 présentant des rainures 9. Les rainures 9 d'une plaque 8 sont de préférence parallèles entre elles, s'étendant d'une extrémité à l'autre de la plaque 8. Les plaques 8 sont disposées de telle sorte que les rainures 9 de deux plaques 8 adjacentes sont alignées et forment une unique rainure s'étendant le long de l'ensemble des plaques 8. Les parties rectilignes 3 du tube 2 sont logées dans les rainures 9. La section des rainures 9 est sensiblement égale à la section extérieure du tube 2, afin que le tube 2, une fois inséré dans une rainure 9, soit bien maintenu. Comme représenté en fig. 1, le tube 2 parcourt les rainures 9, en effectuant des demi-tours lorsqu'il atteint l'extrémité du plafond 1 avant d'entrer dans la rainure 9 suivante. La boucle d'extrémité 4 du tube 2 s'étend alors sur une certaine distance au-delà de la plaque 8 la plus proche de l'extrémité du plafond 1. Cette distance entre l'extrémité de la boucle d'extrémité 4 du tube 2 et la rainure 9 maintenant sa partie rectiligne 3 peut par exemple être au moins égale à 10 fois le diamètre extérieur du tube 2, typiquement de l'ordre de vingt fois le diamètre extérieur du tube 2.

Dans un premier mode de réalisation représenté en fig. 2, un des plats 6a du profilé 5 s'étend au-delà de l'autre plat 6b, le plat 6b, étant disposé du côté inférieur du plafond 1 lors de sa mise en place. Ainsi lors de l'insertion du tube 2 dans le profilé 5, comme illustré aux fig. 2 et 5, le plat 6a peut servir de guide pour la boucle d'extrémité 4 à loger dans le profilé 5. On peut également usiner l'extrémité du plat 6b pour en supprimer les angles coupants afin d'éviter d'abîmer le tube 2 lors de son installation. Enfin, comme illustré en fig. 5, on peut incliner légèrement tout ou une partie du plat 6a afin d'améliorer le guidage du tube 2 lors de son insertion dans le profilé 5, et de réduire les risques d'abîmer le tube 2 lors de son installation.

Dans le premier mode de réalisation de la fig. 2, l'entretoise 7 forme le fond d'un U dont les plats 6 forment les jambes. Le profilé 5 est alors un profilé en U.

Dans un deuxième mode de réalisation, illustré en fig. 3, l'entretoise 7 comporte au moins deux guides, qui forment des butées de positionnement pour une boucle d'extrémité 4. La boucle d'extrémité 4 est ainsi maintenue non seulement dans sa direction longitudinale, mais aussi latéralement.

La profondeur du profilé 5 sur laquelle le tube 2 va être maintenu est déterminée selon la partie de la boucle d'extrémité 4 du tube 2 que l'on désire protéger du pincement. Une partie plus importante de la boucle d'extrémité 4 maintenue par le profilé 5 résulte en une diminution du risque que le tube 2 ne se pince. On peut aussi chercher à agrandir les plats 6 pour augmenter l'échange thermique entre le tube 2 et le profilé, surtout si le profilé est en un matériau conducteur de chaleur tel que l'acier. Les plats 6 peuvent alors contribuer au transfert de la chaleur du tube 2 vers l'ensemble du plafond 1, puis vers la pièce bordée par ledit plafond 1.

Dans le cas où la paroi 1 est un plafond, le profilé 5 selon l'invention peut être installé en étant fixé à une fourrure 10 de plafond, comme illustré en fig. 4.

Une fourrure est un moyen de fixation standard, utilisé dans les plafonds suspendus en plaques de plâtre, sur lequel sont habituellement vissées les plaques de plâtre. Les fourrures sont suspendues à une ossature primaire du bâtiment, par exemple la charpente, par l'intermédiaire de suspentes.

Le profilé 5 et la fourrure 10 peuvent être produits en une seule pièce monobloc, fixés l'un à l'autre en usine, ou encore lors de l'installation du plafond 1 par exemple par vissage. Ceci permet d'optimiser la pose d'un plafond 1 selon l'invention en combinaison avec un plafond suspendu nécessitant l'installation de fourrures.

Le tube 2 peut être monté dans un plafond 1 selon l'invention selon le procédé suivant :
- déroulement du tube 2 le long du plafond 1, d'une première extrémité à une deuxième extrémité du plafond 1, le cas échéant dans une rainure du plafond 1,
- cintrage du tube 2 en vue de le faire repartir en sens inverse, la boucle d'extrémité 4 du tube 2 étant introduite entre les plats 6 d'un premier gabarit 5 comprenant deux plats 6 et une entretoise 7. Dans un mode de réalisation préféré de l'invention, l'étape de cintrage peut être effectuée en deux temps, le tube 2 étant partiellement cintré selon un rayon supérieur à son rayon de cintrage minimal avant son introduction entre les plats 6 du gabarit 5. Puis après ladite introduction le cintrage du tube 2 est complété. Ceci permet de diminuer encore le risque de pincement du tube 2.
- déroulement du tube 2 le long du plafond 1, de la deuxième extrémité à la première extrémité du plafond 1, le cas échéant dans une rainure du plafond 1,
- cintrage du tube 2 en vue de le faire repartir en sens inverse, la boucle d'extrémité 4 du tube 2 étant introduite entre les plats 6 d'un deuxième gabarit 5 comprenant deux plats 6 et une entretoise 7. Là aussi, on peut procéder en deux temps comme indiqué dans le mode préféré de réalisation ci avant.

Ces étapes sont répétées successivement, jusqu'à ce que le montage du tube 2 dans le plafond 1 soit terminé.

Dans le procédé ci-dessus, le gabarit 5 peut présenter un plat 6a qui s'étend au-delà de l'autre, auquel cas le tube 2 est introduit entre les plats 6a, 6b du gabarit 5 depuis le côté opposé au plat 6a.

Le procédé de montage selon l'invention permet de poser un plafond chauffant d'une façon beaucoup plus simple et rapide. En effet le profilé 5 disposé à deux extrémités opposées du plafond 1, permet le montage du tube 2 et notamment de ses boucles d'extrémité 4 sans difficulté particulière et se fait très rapidement. Il n'est plus nécessaire de disposer précisément la boucle d'extrémité 4 selon une forme précise dans une pièce d'extrémité. Il suffit de s'assurer qu'une partie suffisante de l'extrémité de la boucle 4 est bien disposée entre les deux plats 6.

En outre, les boucles d'extrémité 4 peuvent s'étendre sur une certaine distance au-delà de la plaque 8 la plus proche de l'extrémité du plafond 1, comme indiqué ci avant. Cela donne une possibilité de mouvement aux boucles 4, et leur permet de compenser par de la déformation les variations relatives de dilatations entre le tube 2 est son environnement immédiat lors de variations de température du fluide circulant dans le tube 2. Cela permet donc d'éviter des augmentations de la contrainte dans les tubes 2 et les pièces environnantes qui peuvent apparaître en l'absence de possibilités de déformation. On obtient ainsi une longévité plus grande de l'installation grâce à l'invention.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Procédé de montage d'un tube creux (2) dans un plafond (1) ou un autre type de paroi (1) comportant au moins une étape de cintrage d'un tronçon dudit tube creux (2) en vue de former une boucle d'extrémité (4) et faire repartir le tube (2) en sens inverse, **caractérisé en ce qu'**on utilise deux plats (6) parallèles maintenus par un moyen de maintien (7) de l'écartement des deux plats (6), ledit écartement correspondant au diamètre externe dudit tube creux (2), et **en ce qu'**on introduit au moins une partie dudit tronçon entre les plats (6) au cours d'au moins une partie de l'étape de cintrage.

2. Procédé selon la revendication précédente, dans lequel le plat supérieur (6a) s'étend au-delà du plat inférieur (6b).

3. Procédé selon l'une des revendications précédentes, comportant les étapes suivantes :
- cintrage partiel dudit tronçon selon un rayon tel que le risque de pincement du tronçon est très réduit,
- introduction dudit tronçon partiellement cintré entre les plats (6),
- achèvement du cintrage dudit tronçon en maintenant ledit tronçon entre les plats (6).

4. Plafond (1) ou autre type de paroi (1) comprenant un tube creux (2) destiné à la circulation d'un fluide, ledit tube creux (2) comportant des parties rectilignes et au moins une boucle d'extrémité (4) reliant deux parties rectilignes (3), **caractérisé en ce que** ledit plafond (1) ou autre type de paroi (1) comporte au moins deux plats (6) parallèles et un moyen de maintien (7) de l'écartement des deux plats (6), ledit écartement correspondant au diamètre externe du tube creux (2), et **en ce que** au moins une partie de ladite boucle d'extrémité (4) est logée entre les plats (6) de sorte à empêcher un pincement au niveau de ladite boucle d'extrémité (4).

5. Plafond (1) ou autre type de paroi (1) selon la revendication précédente, dans laquelle ledit écartement des deux plats (6) est égal à une valeur comprise entre 1,05 et 1,25 fois le diamètre externe du tube creux (2).

6. Plafond (1) ou autre type de paroi (1) selon la revendication précédente, dans laquelle le plat supérieur (6a) s'étend au-delà du plat inférieur (6b).

7. Plafond (1) ou autre type de paroi (1) selon l'une des revendications 4 à 6, dans laquelle le moyen de maintien comporte une entretoise (7) formant le fond d'un U dont les plats (6) forment les jambes.

8. Plafond (1) ou autre type de paroi (1) selon l'une des revendications 4 à 6, dans laquelle le moyen de maintien comporte une entretoise (7) comportant au moins deux guides formant butées de positionnement pour une boucle d'extrémité (4).

9. Plafond (1) ou autre type de paroi (1) selon l'une des revendications 4 à 8, comportant des plaques (8) présentant des rainures (9), chaque rainure (9) logeant une partie rectiligne (3) dudit tube creux (2), la boucle d'extrémité (4) dudit tube creux s'étendant au-delà de ladite plaque à rainures (8) la plus proche de l'extrémité du plafond (1) ou autre type de paroi (1).

10. Plafond (1) ou autre type de paroi (1) selon la revendication précédente, dans laquelle ladite boucle d'extrémité (4) s'étend au-delà de ladite plaque à rainures (8) la plus proche de l'extrémité du plafond (1) ou autre type de paroi (1) sur une distance au moins égale à dix fois le diamètre externe dudit tube (2).
